Europäisches Patentamt

European Patent Office

Office européen des brevets

(19)

(11)  **EP 1 562 135 A2**

## (12) EUROPEAN PATENT APPLICATION

(43) Date of publication:
**10.08.2005 Bulletin 2005/32**

(51) Int Cl.$^7$: **G06K 9/00**

(21) Application number: **05002031.2**

(22) Date of filing: **01.02.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **05.02.2004 US 772664**

(71) Applicant: **TRW Automotive U.S. LLC
Livonia, Michigan 48150 (US)**

(72) Inventors:
• **Luo, Yun
Livonia, MI 48154 (US)**
• **Wallace, Jon K.
Redford, MI 48239 (US)**
• **Khairallah, Farid
Farmington Hills, MI 48331 (US)**

(74) Representative: **Kitzhofer, Thomas, Dipl.-Ing.
Patentanwälte Prinz & Partner GbR
Manzingerweg 7
81241 München (DE)**

### (54) Process and apparatus for classifying image data using grid models

(57) A system (600) for classifying an input image into one of a plurality of output classes includes a plurality of pattern recognition classifiers (620, 622, 624). Each pattern recognition classifier is operative to process feature data associated with the input image to determine an associated output class of the input image. The system further includes a plurality of feature extractors (610, 612, 614). Each feature extractor extracts feature data from the input image for an associated one of the plurality of pattern recognition classifiers according to a classifier grid model representing the associated classifier.

510

512

504

FIG. 6A

EP 1 562 135 A2

## Description

### Technical Field

The present invention is directed generally to pattern recognition classifiers and is particularly directed to a method and apparatus for classifying images according to determined grid models. The present invention is particularly useful in occupant restraint systems for object and/or occupant classification.

### Background of the Invention

Actuatable occupant restraining systems having an inflatable air bag in vehicles are known in the art. Such systems that are controlled in response to whether the seat is occupied, an object on the seat is animate or inanimate, a rearward facing child seat present on the seat, and/or in response to the occupant's position, weight, size, etc., are referred to as smart restraining systems. One example of a smart actuatable restraining system is disclosed in U.S. Patent No. 5,330,226.

Pattern recognition systems can be loosely defined as systems capable of distinguishing between classes of real world stimuli according to a plurality of distinguishing characteristics, or features, associated with the classes. A number of pattern recognition systems are known in the art, including various neural network classifiers, self-organizing maps, and Bayesian classification models. A common type of pattern recognition system is the support vector machine, described in modern form by Vladimir Vapnik [C. Cortes and V. Vapnik, "Support Vector Networks," *Machine Learning*, Vol. 20, pp. 273-97, 1995].

Support vector machines are intelligent systems that generate appropriate separating functions for a plurality of output classes from a set of training data. The separating functions divide an N-dimensional feature space into portions associated with the respective output classes, where each dimension is defined by a feature used for classification. Once the separators have been established, future input to the system can be classified according to its location in feature space (e.g., its value for N features) relative to the separators. In its simplest form, a support vector machine distinguishes between two output classes, a "positive" class and a "negative" class, with the feature space segmented by the separators into regions representing the two alternatives.

### Summary of the Invention

In accordance with one exemplary embodiment of the present invention, a system for classifying an input image into one of a plurality of output classes includes a plurality of pattern recognition classifiers. Each pattern recognition classifier is operative to process feature data associated with the input image to determine an associated output class of the input image. The system further includes a plurality of feature extractors. Each feature extractor extracts feature data from the input image for an associated one of the plurality of pattern recognition classifiers according to a classifier grid model representing the associated classifier.

In accordance with another exemplary embodiment of the present invention, a system for classifying image data associated with a vehicle occupant safety system into one of a plurality of output classes includes a vision system that images a vehicle interior to provide an input image. The system also includes a plurality of pattern recognition classifiers. Each pattern recognition classifier has an associated output class and is operative to determine if the input image is a member of the associated output class. The system further includes a plurality of feature extractors. Each feature extractor is associated with one of the plurality of pattern recognition classifiers. A given feature extractor extracts feature data from the input image according to a classifier grid model associated with its associated classifier.

In accordance with yet another exemplary embodiment of the present invention, a method is provided for classifying image data into one of a plurality of output classes. A classifier grid model associated with a pattern recognition classifier is established. An unknown object is imaged to create an input image. The classifier grid model is overlaid over the input image to produce a plurality of sub-images. Feature data is extracted from the plurality of sub-images. The unknown object is classified from the extracted feature data.

### Brief Description of the Drawings

The foregoing and other features and advantages of the present invention will become apparent to those skilled in the art to which the present invention relates upon reading the following description with reference to the accompanying drawings, in which:

Fig. 1 is a schematic illustration of an actuatable restraining system in accordance with an exemplary embodiment of the present invention;
Fig. 2 is a schematic illustration of a stereo camera arrangement for use with the present invention for determining location of an occupant's head;
Fig. 3 is a flow chart showing a classification process in accordance with an exemplary embodiment of the present invention;
Fig. 4 is a schematic illustration of the feature extraction process in accordance with an exemplary embodiment of the present invention;
Fig. 5 is a flow chart showing a grid generation algorithm in accordance with an exemplary embodiment of the present invention;
Figs. 6A - 6D provide a schematic illustration of an imaged shape example subjected to an exemplary grid generation algorithm in accordance with an exemplary embodiment of the present invention; and Fig. 7 is a diagram illustrating a classifier training system in accordance with an exemplary embodiment of the present invention.

## Description of Preferred Embodiment

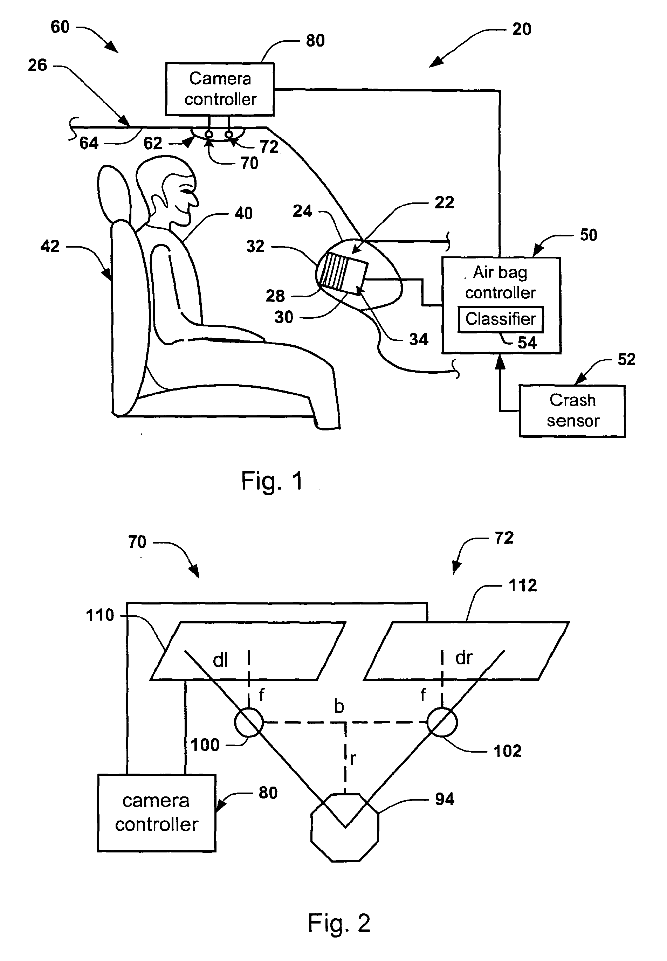

Referring to Fig. 1, an exemplary embodiment of an actuatable occupant restraint system 20, in accordance with the present invention, includes an air bag assembly 22 mounted in an opening of a dashboard or instrument panel 24 of a vehicle 26. The air bag assembly 22 includes an air bag 28 folded and stored within the interior of an air bag housing 30. A cover 32 covers the stored air bag and is adapted to open easily upon inflation of the air bag 28.

The air bag assembly 22 further includes a gas control portion 34 that is operatively coupled to the air bag 28. The gas control portion 34 may include a plurality of gas sources (not shown) and vent valves (not shown) for, when individually controlled, controlling the air bag inflation, e.g., timing, gas flow, bag profile as a function of time, gas pressure, etc. Once inflated, the air bag 28 may help protect an occupant 40, such as a vehicle passenger, sitting on a vehicle seat 42. Although the embodiment of Fig. 1 is described with regard to a vehicle passenger seat, it is applicable to a vehicle driver seat and back seats and their associated actuatable restraining systems. The present invention is also applicable to the control of side actuatable restraining devices and to actuatable devices deployable in response to rollover events.

An air bag controller 50 is operatively connected to the air bag assembly 22 to control the gas control portion 34 and, in turn, inflation of the air bag 28. The air bag controller 50 can take any of several forms such as a microcomputer, discrete circuitry, an application-specific-integrated-circuit ("ASIC"), etc. The controller 50 is further connected to a vehicle crash sensor 52, such as one or more vehicle crash accelerometers. The controller monitors the output signal(s) from the crash sensor 52 and, in accordance with an air bag control algorithm using a deployment control algorithm, determines if a deployment event is occurring, i.e., one for which it may be desirable to deploy the air bag 28. There are several known deployment control algorithms responsive to deployment event signal(s) that may be used as part of the present invention. Once the controller 50 determines that a deployment event is occurring using a selected crash analysis algorithm, for example, and if certain other occupant characteristic conditions are satisfied, the controller 50 controls inflation of the air bag 28 using the gas control portion 34, *e.g.*, timing, gas flow rate, gas pressure, bag profile as a function of time, etc.

The air bag restraining system 20, in accordance with the present invention, further includes a stereo-vision assembly 60. The stereo-vision assembly 60 includes stereo-cameras 62 preferably mounted to the headliner 64 of the vehicle 26. The stereo-vision assembly 60 includes a first camera 70 and a second camera 72, both connected to a camera controller 80. In accordance with one exemplary embodiment of the present invention, the cameras 70, 72 are spaced apart by approximately 35 millimeters ("mm"), although other spacing can be used. The cameras 70, 72 are positioned in parallel with the front-to-rear axis of the vehicle, although other orientations are possible.

The camera controller 80 can take any of several forms such as a microcomputer, discrete circuitry, ASIC, etc. The camera controller 80 is connected to the air bag controller 50 and provides a signal to the air bag controller 50 to provide data relating to various image characteristics of the occupant seating area, which can range from an empty seat, an object on the seat, a human occupant, etc. Herein, image data of the seating area is generally referred to as occupant data, which includes all animate and inanimate objects that might occupy the occupant seating area. The air bag control algorithm associated with the controller 50 can be made sensitive to the provided image data. For example, if the provided image data indicates that the occupant 40 is an object, such as a shopping bag, and not a human being, actuating the air bag during a crash event serves no purpose. Accordingly, the air bag controller 50 can include a pattern recognition classifier assembly 54 operative to distinguish between a plurality of occupant classes based on the image data provided by the camera controller 80 that can then, in turn, be used to control the air bag.

Referring to Fig. 2, the cameras 70, 72 may be of any several known types. In accordance with one exemplary embodiment, the cameras 70, 72 are charge-coupled devices ("CCD") or complementary metal-oxide semiconductor ("CMOS") devices. The output of the two devices can be combined to provide three-dimension information about an imaged subject 94 as a stereo disparity map. Since the cameras are at different viewpoints, each camera sees the subject at an associated different position. The image difference is referred to as "disparity." To get a proper disparity determination, it is desirable for the cameras to be positioned and set up so that the subject 94 to be monitored is within the horopter of the cameras.

The subject 94 is viewed by the two cameras 70, 72. Since the cameras 70, 72 view the subject 94 from different viewpoints, two different images are formed on the associated pixel arrays 110, 112, of cameras 70, 72 respectively. The distance between the viewpoints or camera lenses 100, 102 is designated "b." The focal length of the lenses 100 and 102 of the cameras 70 and 72 respectively, is designated as "f." The horizontal distance from the image center on the CCD or CMOS pixel array 110 and a given pixel representing a portion of the subject 94 on the pixel array 110 of camera 70 is designated "dl" (for the left image distance).

The horizontal distance from the image center on the CCD or CMOS pixel array 112 and a given pixel representing a portion of the subject 94 on the pixel array 112 for the camera 72 is designated "dr" (for the right image distance). Preferably, the cameras 70, 72 are mounted so that they are in the same image plane. The difference between dl and dr is referred to as the image disparity. The analysis can be performed pixel by pixel for the two pixel arrays 110, 112 to generate a stereo disparity map of the imaged subject 94, wherein a given point on the subject 94 can be represented by x and y coordinates associated with the pixel arrays and an associated disparity value.

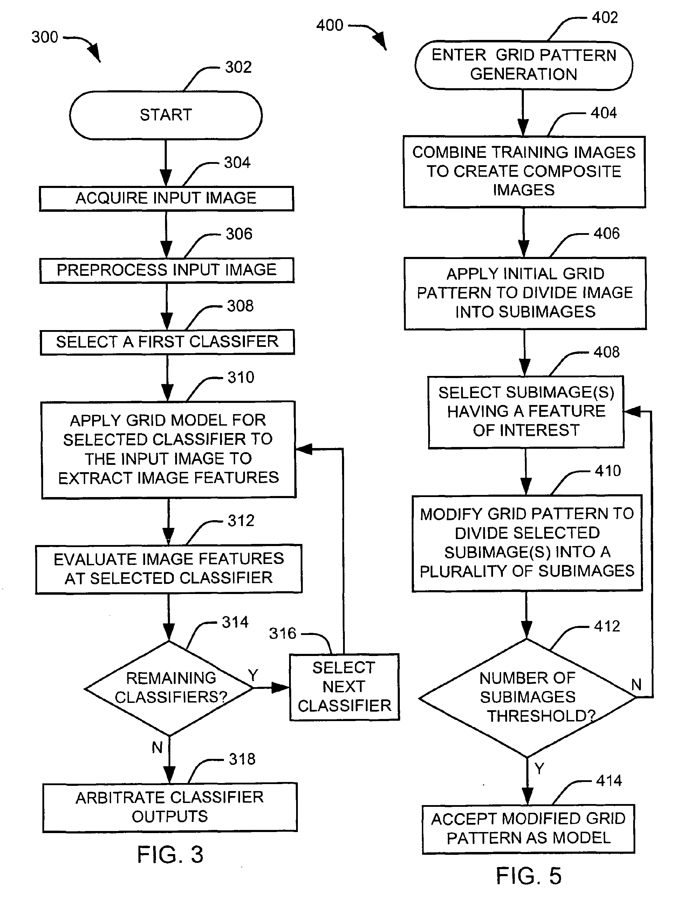

Referring to Fig. 3, a classification process 300 for the pattern recognition classification assembly 54, in accordance with one exemplary embodiment of the present invention, is shown. Although serial and parallel processing is shown, the flow chart is given for explanation purposes only and the order of the steps and the type of processing can vary from that shown. The classification process is initialized at step 302, in which internal memories are cleared, initial flag conditions are set, etc. At step 304, an input image is acquired. For example, the input image can be a two or three-dimension image of the interior of the vehicle 26 acquired by the cameras 70, 72.

For two-dimensional applications, the image can be acquired by either of the cameras 70, 72 using known digital imaging techniques. Three-dimensional image data can be provided via the cameras 70, 72 as a stereo disparity map. The Otsu algorithm [Nobuyuki Otsu, "A Threshold Selection Method from Gray-Level Histograms," IEEE Transactions on Systems, Man, and Cybernetics, Vol. 9, No.1, pp. 62-66, 1979] can be used to obtain a binary image of an object with the assumption that a given subject of interest is close to the camera system. The stereo images are processed in pairs and the disparity map is calculated to derive 3D information about the image.

The acquired image is preprocessed in step 306 to remove background information and noise. The image can also be processed to better emphasize desired image features and maximize the contrast between structures in the image. For example, a contrast limited adaptive histogram equalization (CLAHE) process can be applied to adjust the image for lighting conditions based on an adaptive equalization algorithm. The CLAHE process lessens the influence of saturation resulting from direct sunlight and low contrast dark regions caused by insufficient lighting. The CLAHE process subdivides the image into contextual regions and applies a histogram-based equalization to each region. The equalization process distributes the grayscale values in each region across a wider range to accentuate the contrast between structures within the region. This can make otherwise hidden features of the image more visible.

At step 308, a first classifier is selected. It will be appreciated that while the selection of classifiers is presented herein in series for ease of description, some or all of the classifiers can be operated in parallel without departing from the spirit of the present invention. For example, the input image can be provided in parallel to a plurality of classifiers, and the following steps can be performed at each.

At step 310, a classifier grid model is utilized to extract feature data, in the form of a feature vector, from the input image. A feature vector contains a plurality of elements representing an image. Each element can assume a value corresponding to a quantifiable image feature. A grid model representing a given classifier can be obtained from a set of training images for the classifier according to a grid generation algorithm.

The grid model for the selected classifier is applied, or overlaid upon, the input image to divide the image into a plurality of sub-images. Each sub-image contributes one or more values for elements within a feature vector representing the input image. The contributed values are derived from the sub-image for one or more attributes of interest. The attributes of interest can include the average brightness of the sub-image, the variance of the grayscale values of the pixels comprising the sub-image, a coarseness measure of the sub-image, or other similar measures.

Once the image has been reduced to a feature vector using the classifier grid model, it is provided to the selected classifier at step 312 for evaluation. The classifier selects an output class for the input image from a plurality of associated output classes. The classifier can be trained on a plurality of training images to allow it to discriminate among its associated plurality of output classes. In an exemplary embodiment, training data for the classifier is extracted from the training images using the classifier grid model. A confidence value representing the likelihood that the input image is a member of the selected class can be determined from the feature vector and the extracted training data.

For example, a pattern recognition processor implemented as a support vector machine can process extracted training data to produce functions representing boundaries in a feature space defined by the various attributes of interest. The bounded region for each class defines a range of feature values associated with the class. The location of the feature vector representing the input image with respect to these boundaries can be used to determine the class membership of the input image and the associated confidence value.

Once a confidence value for the selected class has been determined, it is determined at step 314 if additional classifiers remain that have not been selected. If additional classifiers remain, a next classifier is selected at step 316 and the method returns to step 310 to evaluate the input image at the selected classifier. If all of the classifiers have been selected, the method advances to step 318.

At step 318, the confidence values associated with the classes selected at each classifier are evaluated according to an arbitration process to determine to which of the plurality of selected classes the input image is most likely to belong. For example, the class having the largest associated confidence value can be selected by the arbitrator.

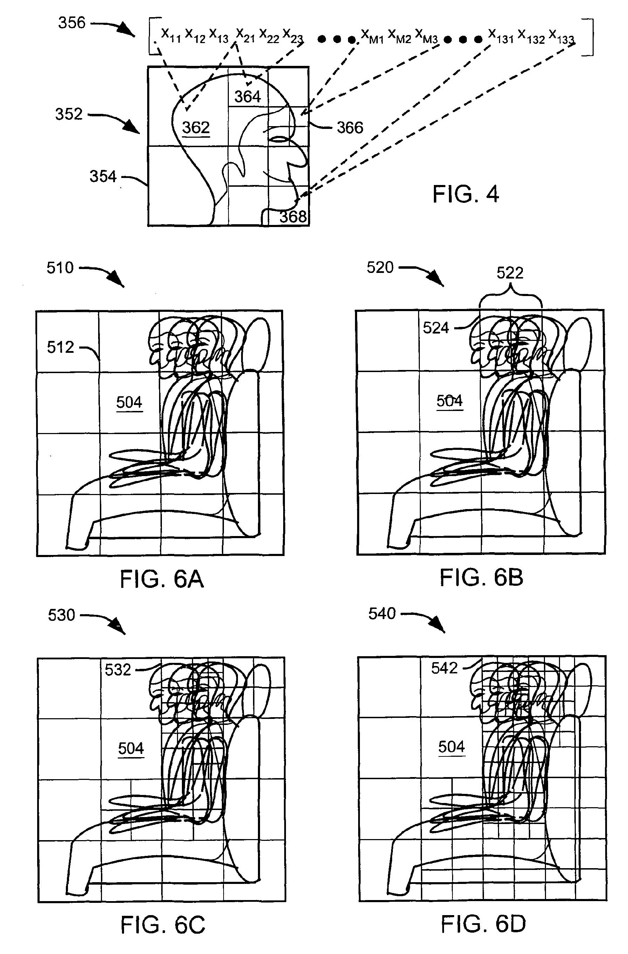

The feature extraction process 310 will be appreciated with respect to Fig. 4. Fig. 4 illustrates an input image 352 divided into a plurality of sub-images by a classifier grid model 354. In the illustrated example, a set of three feature values are extracted from each of thirteen sub-images to produce a thirty-nine element feature vector 356. For example, an average grayscale value, a contrast measure, and a coarseness value can be extracted from each sub-image. It will be appreciated that the illustrated grid model 354 and image 352 are simplified for the purpose of example.

A first sub-image 362 provides a first set of three feature values ($X_{11}$ - $X_{13}$). A second sub-image 364 also provides three feature values ($X_{21}$ - $X_{23}$) to the feature vector, despite the fact that the second sub-image includes one-fourth the area of the first sub-image. The grid model 354 indicates that the area represented by the second sub-image 364 contains an increased level of an attribute of interest (*e.g.*, contrast), indicating that the area around the second sub-image may contain a higher concentration of desired feature information. Accordingly, the first sub-image 362 and the second sub-image 364 contribute an equal amount of feature data to the feature vector 356 representing the input image 352 despite the difference in size.

An $M^{th}$ sub-image 366 provides three feature values ($X_{M1}$ - $X_{M3}$) to the feature vector. The $M^{th}$ sub-image 366 represents a portion of the image having a very high level of the attribute of interest. Accordingly, the $M^{th}$ sub-image 366 can provide a significant amount of information concerning that attribute with an area smaller than that of the first sub-image 362 or the second sub-image 364. A final three feature values ($X_{131}$ - $X_{133}$) are provided to the feature vector 356 by a thirteenth sub-image 368.

The grid model generation algorithm 400 will be appreciated with respect to Fig. 5. Although serial and parallel processing is shown, the flow chart is given for explanation purposes only and the order of the steps and the type of processing can vary from that shown. The grid generation algorithm is initialized and provided with a set of training images representing a pattern recognition classifier, in step 402.

The training images are combined into a composite image at step 404. The composite image provides an overall representation of one or more features across the subset, such as brightness, hue, saturation, coarseness, and contrast. For a set of grayscale images, for example, the class feature image can be formed according to a pixel-by-pixel averaging of brightness across the subset of images. It will be appreciated that the training images and the composite class image can be a 2D gray scale images, 2D color images, or a 3D images, such as a stereo disparity map. The image region defines an image frame along its borders.

At step 406, an initial grid pattern is applied to the image frame. The initial grid pattern divides the image into a plurality of sub-images in a predetermined fashion. The form of the initial grid pattern will vary with the form of the composite class image and the application. For example, a two-dimensional grid pattern can comprise one or more intersecting lines and curves, shaped to fit the image frame. A three-dimensional grid pattern can comprise a one or more intersecting planes and curved surfaces, arranged to provide sub-image regions. It will be appreciated that the grid pattern is not a tangible alteration to the image, but rather an abstract representation of a division of the image into desirable sub-images. For the purpose of discussion, however, it is instructive to discuss the lines and planes composing the grid pattern as tangible entities and illustrate them accordingly.

In an exemplary embodiment, the initial grid pattern is applied to divide the composite image into sub-images of the same general size and shape. For example, if the original image is a two-dimensional square, the initial grid pattern can be divided into $2^{2N}$ squares of equal size by ($4N$ - $2$) intersecting lines, where N is a positive integer. Similarly, a two-dimensional circular region can be divided into a plurality of equal size wedge-shapes regions via one or more evenly spaced lines drawn through a center point of the circular region. One skilled in the art will appreciate additional methods of determining an initial grid for various applications from the description herein.

At step 408, the sub-images are evaluated for one or more attributes of interest, and any sub-images containing the desired attributes are selected. For example, an attribute of interest can be a variance in the grayscale values of the pixels that meets a certain threshold value. In an exemplary embodiment, the sub-images are evaluated to determine a sub-image that contains a maximum value for an attribute of interest, such that one sub-image is selected for each evaluation. For example, a sub-image having a maximum average brightness over its constituent pixels can be selected. It will be appreciated that the attributes of interest can vary with the nature of the image. Exemplary attributes of interest can include an average or variance measure of the color saturation of a sub-image, a coarseness measure of the sub-image coarseness, an average or variance measure of the hue of the sub-image, and an average or variance of the brightness of the sub-image.

At step 410, the grid pattern is modified to divide the selected one or more sub-images into respective pluralities of sub-images. A selected sub-image can be divided by adding one or more line segments to the grid pattern to separate the sub-image into two or more new sub-images. In an exemplary embodiment, the selected sub-images are divided as to produce sub-images of the same general shape. For example, if the initial grid pattern separates the image into square sub-images, the grid pattern can be modified such that a selected sub-image is separated into a plurality of smaller squares.

At step 412, it is determined if the modified grid divides the image into a threshold number of sub-images. If the number of sub-images is less than the threshold, the method returns to step 406 to select an additional one or more sub-images to be further divided. During the new iteration of the algorithm, all of the sub-images created during the previous iteration are evaluated for selection according to their associated values of the attribute of interest. If the number of sub-images exceeds the threshold, the method advances to step 414, where the modified grid pattern is accepted as a representative grid model for the classifier. The classifier representative grid model can then be utilized in extracting feature data from input images provided to the classifier.

Figs. 6A - 6D illustrate the progression of an exemplary grid generation algorithm applied to a composite image 504. The composite image 504 is a simplified representation of a composite image that could be acquired in a vehicle safety control application. The illustrated composite image 504 represents training images depicting a plurality of images of adult passengers. It will be appreciated that more complicated images will generally be acquired in practice. For example, the composite image used in the grid generation algorithm can be generated as a combination of a large number of training images (*e.g.*, between one thousand and ten-thousand images). Such a composite image is unlikely in practice to provide a clear, definite image of the imaged object as is illustrated in Figs. 6A - 6D.

In the exemplary algorithm, each square sub-image is divided into four square sub-images of equal size until a threshold of one hundred sub-images is reached. The attribute of interest for the exemplary algorithm is a maximum contrast value. The algorithm is illustrated as a series of four stages 510, 520, 530, and 540, with each stage representing a selected point in the algorithm. It will be appreciated that several iterations of the algorithm can occur between illustrated stages and that the number of iterations occurring between the stages is not constant.

In Fig. 6A, a first stage 510 of the exemplary grid generation algorithm is illustrated. In the first stage 510, an initial grid pattern 512 is imposed over the composite image 504. The initial grid pattern 512 divides the image into sixteen square sub-images of equal size. It will be appreciated that the initial grid pattern is applied to the image in the same manner regardless of any attributes of the image.

At Fig. 6B, a second stage 520 of the exemplary grid generation algorithm is illustrated. At the second stage, a sub-image 522 has been selected as having a maximum associated amount of contrast in comparison to the other fifteen sub-images formed by the initial grid, in accordance with the exemplary algorithm. The initial grid pattern is modified to divide the selected sub-image 522 into four additional sub-images, such that the modified grid pattern 524 divides the image into nineteen sub-images. As the algorithm continues, each of these sub-images will be evaluated along with the original sixteen sub-images in selecting a sub-image with optimal contrast.

Fig. 6C illustrates a third stage 530 of the exemplary grid generation algorithm. At the third stage 530, the algorithm has proceeded through ten additional iterations, such that the modified grid pattern 532 divides the image into forty-nine sub-images. At this stage 530, the modified grid algorithm has already begun to emphasize regions of high contrast within the image 504 and deemphasize regions of low contrast within the image 504. For example, the four sub-images created from the initial grid pattern that comprise the upper left corner of the image contain no contrast. Accordingly, the four sub-images have not been further divided, which minimizes their impact upon the feature data extracted from the image. The upper right corner, however, contains a significant amount of contrast and has been subdivided extensively under the algorithm.

Fig. 6D illustrates a fourth stage 540 of the exemplary grid generation algorithm. At the fourth stage 540, the modified grid pattern has reached one-hundred sub-images, completing the exemplary grid generation algorithm. The completed grid pattern 542 contains a large number of sub-images around the high contrast portions of the image 504, such as the head and torso of the occupant, and significantly fewer sub-images within the low contrast portions of the image. Accordingly, the completed grid 542 selectively emphasizes data found within high contrast regions associated with the composite image for the classifier when utilized to extract feature data from input images.

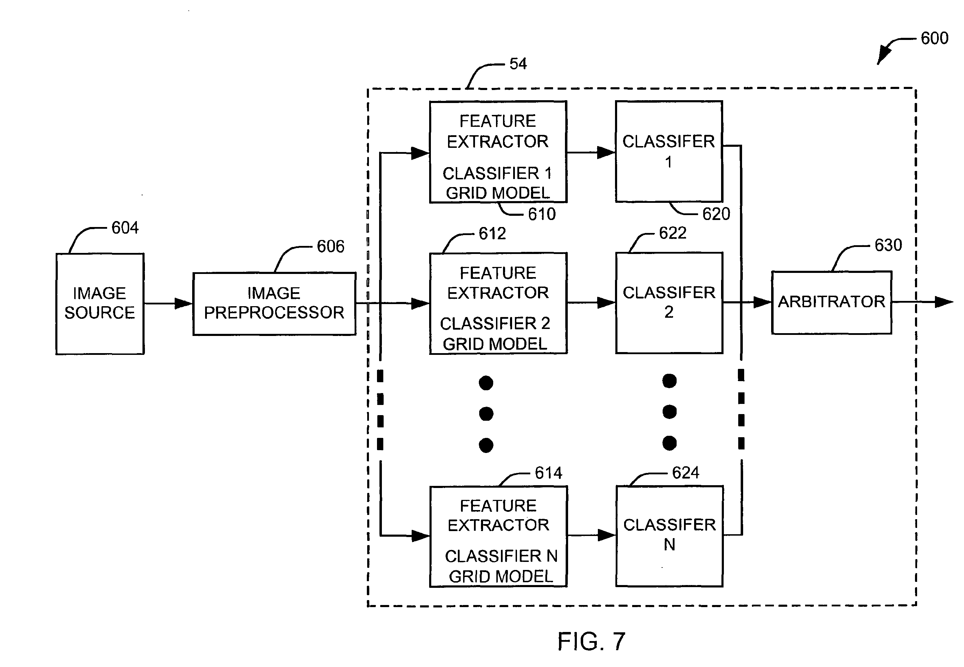

Referring to Fig. 7, the classification process will be better appreciated. A classification system 600 in accordance with an exemplary embodiment of the present invention can be utilized as part of the actuatable occupant restraint system 20 illustrated in Fig. 1. For example, a classifier assembly 54 can be used to determine an associated class from a plurality of classes (*e. g.*, adult, child, rearward facing infant seat, etc.) for the occupant of a passenger seat of an automobile to control the deployment of an air bag associated with the seat. Similarly, the classifier assembly 54 can be used to facilitate the identification of an occupant's head by determining if a candidate object resembles a human head. It will be appreciated that the classification system 600 can be implemented, at least in part, as computer software operating on a general purpose computer.

An image source 604 acquires an input image from the vehicle interior. The image source 604, for example, can comprise one or more digital cameras that can produce a digital representation of a subject within the interior of the vehicle. In an exemplary embodiment, the image source can comprise a stereo camera, such as that illustrated in Figs. 1 and 2. Accordingly, the input image can comprise a two-dimensional image, such as a grayscale image, or a three-dimensional image represented as stereo disparity map.

The input image is provided to a preprocessing component 606 to improve the resolution and visibility of the input image. For example, the image can be filtered to remove noise within the image and segmented to remove extraneous background information from the image. In an exemplary embodiment, a contrast limited adaptive histogram equalization can be applied to adjust the image for lighting conditions. The equalization eliminates saturated regions and dark regions caused by non-ideal lighting conditions. The image can be equalized at each of a plurality of determined low contrast regions to distribute a relatively narrow range of grayscale values within each region across a wider range of values. This can eliminate regions of limited contrast (e.g., regions of saturation or low illumination) and reveal otherwise indiscernible structures within the low contrast regions.

The preprocessed input image is then provided to the classification assembly 54 at each of a plurality of feature extractors 610, 612, 614, where feature extractor 614 represents an Nth classifier grid model and N is an integer greater than one. The feature extractors 610, 612, 614 extract feature data representing the input image for associated classifiers 620, 622, 624, where classifier 614 represents an Nth classifier and N is an integer greater than one. In the illustrated embodiment, each classifier represents a particular output class. A given feature extractor (e.g., 610) utilizes a classifier grid model representing its associated output class. It will be appreciated, however, that the classifiers 620, 622, 624 can be configured to have multiple associated classes. In such a case, the grid model for each classifier would be configured to represent multiple output classes.

A classifier grid model determines regions of the class composite images of particular importance in discriminating images of their associated classes. For example, a classifier grid model can emphasize regions of the image containing desirable values of a particular attribute of interest. Exemplary attributes can include an average or variance measure of the color saturation of a sub-image, a coarseness measure of the sub-image coarseness, an average or variance measure of the hue of the sub-image, and an average or variance of the brightness of the sub-image.

A given classifier grid model comprises a plurality of separator elements that can be applied to an input image to generate a plurality of sub-images. Regions of interest to a particular class are indicated within its associated class grid pattern by an increased density of separator elements at the regions of interest. Accordingly, when the class grid image is applied to an image, an increased number of sub-images will be generated in the regions of interest.

A given feature extractor (e.g., 610) reduces the input image to a feature vector according to the grid pattern associated with the class. A feature vector represents an image as a plurality of elements, where each element represents an image feature. The grid pattern is applied to the input image to define a plurality of sub-images, and each sub-image contributes an equal number of elements to the feature vector according to one or more attributes of the sub-image.

In an exemplary embodiment, the following attributes are extracted from each sub-image:

1) Average grayscale intensity:

$$\bar{I} = \frac{\sum_{i=1}^{n} I_i}{n}$$

2) Variance of grayscale intensity values:

$$\sigma = \sqrt{\frac{\sum_{i=1}^{n}(I_i - \bar{I})^2}{n-1}}$$

3) Coarseness:

$$Co = \sum_{(x,y) \in \mathrm{Re}\,gion} C(x, y)$$

The coarseness measure represents an average size of homogenous regions within a sub-image (e.g., regions of pixels approximately the same grayscale value), and provides a texture measure for the sub-image.

A given classifier (e.g., 620) processes the feature vector provided by its associated feature extractor (e.g., 610) to select a class from its associated output classes and provide a confidence value representing the likelihood that the input image is associated with the selected class. For a vehicle safety system application, the output classes can represent potential occupants of a passenger seat, such as a child class, an adult class, a rearward facing infant seat class, an empty seat class, and similar useful classes. Similarly, the output classes can represent human heads and other shapes (e.g., headrests) resembling a human head for determining the position of an occupant.

In the illustrated implementation, each classifier has two effective classes, its associated class and a negative class corresponding to its associated class. Effectively, each classifier simply determines if the input image falls within its associated class and outputs an associated confidence value. It will be appreciated, however, that the classifiers 620, 622, 624 can be configured to have additional associated output classes.

The classifiers 620, 622, 624 can be implemented as any of a number of intelligent systems suitable for classifying an input image. In an exemplary embodiment, the classifier 54 can utilize one of a Support Vector Machine ("SVM") algorithm or an artificial neural network ("ANN") learning algorithm to classify the image into one of a plurality of output classes.

A SVM classifier can utilize a plurality of functions, referred to as hyperplanes, to conceptually divide boundaries in the N-dimensional feature space, where each of the N dimensions represents one associated feature of the feature vector. The boundaries define a range of feature values associated with each class. Accordingly, an output class and an associated confidence value can be determined for a given input feature vector according to its position in feature space relative to the boundaries.

An ANN classifier comprises a plurality of nodes having a plurality of interconnections. The values from the feature vector are provided to a plurality of input nodes. The input nodes each provide these input values to layers of one or more intermediate nodes. A given intermediate node receives one or more output values from previous nodes. The received values are weighted according to a series of weights established during the training of the classifier. An intermediate node translates its received values into a single output according to a transfer function at the node. For example, the intermediate node can sum the received values and subject the sum to a binary step function. A final layer of nodes provide the confidence values for the various output classes of the ANN, with each node having an associated value representing a confidence for one of the associated output classes of the classifier.

The training process of the classifier 54 will vary with its implementation, but the training generally involves a statistical aggregation of training data from a plurality of training images into one or more parameters associated with the output class. For example, a SVM classifier can process the training data to produce functions representing boundaries in a feature space defined by the various attributes of interest. Similarly, an ANN classifier can process the training data to determine a set of interconnection weights corresponding to the interconnections between nodes in its associated the neural network.

An arbitrator 630 evaluates the outputs of the classifiers 620, 622, 624 to determine an output class for the input image. In the illustrated example, the arbitrator 630 can simply select the output of the classifier (*e.g.*, 622) providing the largest confidence value for its selected class. More complex methods of arbitrating between the results can be useful, however, for more complicated classifier arrangements, and the function of the arbitrator will vary with the application.

From the above description of the invention, those skilled in the art will perceive improvements, changes, and modifications. Such improvements, changes, and modifications within the skill of the art are intended to be covered by the appended claims.

**Claims**

1.   A system for classifying an input image into one of a plurality of output classes, said system comprising:

   a plurality of pattern recognition classifiers, each pattern recognition classifier operative to process feature data associated with the input image to determine an associated output class of the input image; and
   a plurality of feature extractors, each feature extractor extracting feature data from the input image for an associated one of the plurality of pattern recognition classifiers according to a classifier grid model representing the associated classifier.

2.   The system of claim 1 wherein a given feature vector applies the classifier grid model representing its associated classifier to the input image to produce a plurality of sub-images, the feature extractor extracting feature data relating to each of the plurality of sub-images.

3.   The system of claim 1 wherein at least one of the plurality of pattern recognition classifiers includes a support vector machine.

4.   The system of claim 1 wherein at least one of the plurality of pattern recognition classifiers includes an artificial neural network.

5.   The system of claim 1 further comprising an image source that provides the input image.

6.   The system of claim 5 wherein the image source includes a stereo camera.

7.   The system of claim 1 further comprising an arbitrator associated with the plurality of pattern recognition classifiers that evaluates a plurality of outputs associated with the classifiers and determines an associated output class for the input image from the plurality of classifier outputs.

8.   The system of claim 1 further comprising an image preprocessor that removes background information and noise from the input image.

9. The system of claim 8, the image preprocessor applying a contrast limited adaptive histogram equalization that adjusts the image for lighting conditions.

10. The system of claim 1 wherein each of the plurality of classifiers represents at least one associated output class and classifier grid model associated with the each classifier is derived from training images associated with the at least one associated output class.

11. A system for classifying image data associated with a vehicle occupant safety system into one of a plurality of output classes, said system comprising:

a vision system that images a vehicle interior to provide an input image;
a plurality of pattern recognition classifiers, each pattern recognition classifier having an associated output class and being operative to determine if the input image is a member of the associated output class; and
a plurality of feature extractors, each feature extractor being associated with one of the plurality of pattern recognition classifiers and extracting feature data from the input image according to a classifier grid model associated with its associated classifier.

12. The system of claim 11 wherein at least one of the plurality of output classes represents a human adult seated within the vehicle interior.

13. The system of claim 11 wherein at least one of the plurality of output classes represents a rearward facing infant seat positioned within the vehicle interior.

14. The system of claim 11 wherein at least one of the plurality of output classes represents a human head.

15. The system of claim 11, the vision system comprising a stereo vision system that produces three-dimension image data of the vehicle interior as a stereo disparity map.

16. A method for classifying image data into one of a plurality of output classes comprising the steps of:

establishing a classifier grid model associated with a pattern recognition classifier;
imaging an unknown object to create an input image;
overlaying the classifier grid model over the input image to produce a plurality of sub-images;
extracting feature data from the plurality of sub-images; and

classifying the unknown object from the extracted feature data.

17. The method of claim 16 wherein the step of establishing a classifier grid model includes:

generating a representative image that represents at least one output class associated with the classifier;
dividing the representative image according to an initial grid pattern to form a plurality of sub-images;
identifying at least one sub-image formed by said grid pattern having at least one attribute of interest; and
modifying said grid pattern in response to the identified at least one sub-image having said at least one attribute of interest so as to form a modified grid pattern.

18. The method of claim 17 wherein the step of generating a representative image includes combining a plurality of training images associated with the classifier.

19. The method of claim 17, wherein the step of modifying the grid pattern includes modifying the grid pattern to divide the identified sub-images into respective pluralities of sub-images.

20. The method of claim 17 wherein the steps of identifying at least one sub-image and modifying the grid pattern in response to the identified sub-image are repeated iteratively until a termination event is recorded.

21. The method of claim 20 wherein the termination event comprises producing a modified grid that divides the class composite image into a threshold number of sub-images.

22. The method of claim 16 wherein extracting feature data from the plurality of sub-images includes extracting a set of at least one feature value from each sub-image, such that each sub-image provides an equal number of feature values to an associated feature vector.

23. The method of claim 22 wherein the at least feature value includes an average grayscale value associated with each sub-image.

24. The method of claim 22 wherein the at least feature value includes a coarseness measure associated with each sub-image.

25. The method of claim 22 wherein the at least feature value includes a contrast measure associated with each sub-image.

26. The method of claim 16, wherein imaging an unknown object includes imaging an occupant of a passenger seat within a vehicle.

Fig. 1

Fig. 2

300 ⟍

302
START

304
ACQUIRE INPUT IMAGE

306
PREPROCESS INPUT IMAGE

308
SELECT A FIRST CLASSIFER

310
APPLY GRID MODEL FOR SELECTED CLASSIFIER TO THE INPUT IMAGE TO EXTRACT IMAGE FEATURES

312
EVALUATE IMAGE FEATURES AT SELECTED CLASSIFIER

314
REMAINING CLASSIFIERS?

316
SELECT NEXT CLASSIFIER

Y

N

318
ARBITRATE CLASSIFIER OUTPUTS

FIG. 3

400 ⟍

402
ENTER GRID PATTERN GENERATION

404
COMBINE TRAINING IMAGES TO CREATE COMPOSITE IMAGES

406
APPLY INITIAL GRID PATTERN TO DIVIDE IMAGE INTO SUBIMAGES

408
SELECT SUBIMAGE(S) HAVING A FEATURE OF INTEREST

410
MODIFY GRID PATTERN TO DIVIDE SELECTED SUBIMAGE(S) INTO A PLURALITY OF SUBIMAGES

412
NUMBER OF SUBIMAGES THRESHOLD?

N

Y

414
ACCEPT MODIFIED GRID PATTERN AS MODEL

FIG. 5

356 ⟶ $\begin{bmatrix} X_{11} & X_{12} & X_{13} & X_{21} & X_{22} & X_{23} & \bullet\bullet\bullet\bullet & X_{M1} & X_{M2} & X_{M3} & \bullet\bullet\bullet\bullet & X_{131} & X_{132} & X_{133} \end{bmatrix}$

352 ⟶

364

362

366

354

368

**FIG. 4**

510 ⟶

512

504

**FIG. 6A**

520 ⟶   522

524

504

**FIG. 6B**

530 ⟶

532

504

**FIG. 6C**

540 ⟶

542

504

**FIG. 6D**

FIG. 7

EP 1 562 135 A2